(19) Europäisches Patentamt / European Patent Office / Office européen des brevets

(11) **EP 3 590 159 B1**

(12) **FASCICULE DE BREVET EUROPEEN**

(45) Date de publication et mention
de la délivrance du brevet:
**21.04.2021 Bulletin 2021/16**

(51) Int Cl.:
*H01S 3/067* [(2006.01)]   *G01J 3/42* [(2006.01)]
*H01S 3/23* [(2006.01)]   *G01N 21/71* [(2006.01)]
*H01S 3/10* [(2006.01)]   *H01S 3/094* [(2006.01)]
*H01S 3/00* [(2006.01)]   *G01J 3/10* [(2006.01)]
*G01J 3/443* [(2006.01)]

(21) Numéro de dépôt: **18708954.5**

(22) Date de dépôt: **27.02.2018**

(86) Numéro de dépôt international:
**PCT/EP2018/054829**

(87) Numéro de publication internationale:
**WO 2018/158261 (07.09.2018 Gazette 2018/36)**

(54) **SOURCE LASER POUR L'EMISSION D'UN GROUPE D'IMPULSIONS**

LASERQUELLE ZUR EMISSION EINER GRUPPE VON IMPULSEN

LASER SOURCE FOR EMITTING A GROUP OF PULSES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.02.2017 FR 1751653**

(43) Date de publication de la demande:
**08.01.2020 Bulletin 2020/02**

(73) Titulaires:
• **Centre National de la Recherche Scientifique**
**75016 Paris (FR)**
• **Institut National des Sciences Appliquées - Rouen**
**76801 St. Etienne du Rouvray (FR)**
• **Université de Rouen Normandie**
**76821 Mont-Saint-Aignan (FR)**

(72) Inventeurs:
• **HIDEUR, Ammar**
**76140 Le Petit Quevilly (FR)**
• **HABOUCHA, Adil**
**76800 Saint-Etienne-du-Rouvray (FR)**
• **BULTEL, Arnaud**
**76100 Rouen (FR)**

• **IDLAHCEN, Said**
**76300 Sottevile-lès-Rouen (FR)**
• **GODIN, Thomas**
**76140 Le Petit Quevilly (FR)**

(74) Mandataire: **Marks & Clerk France**
**Immeuble "Visium"**
**22, avenue Aristide Briand**
**94117 Arcueil Cedex (FR)**

(56) Documents cités:
**US-A1- 2009 080 467    US-A1- 2009 246 413**

• **MARCO KIENEL ET AL: "Multidimensional coherent pulse addition of ultrashort laser pulses", OPTICS LETTERS, OPTICAL SOCIETY OF AMERICA, vol. 40, no. 4, 15 février 2015 (2015-02-15), pages 522-525, XP001593955, ISSN: 0146-9592, DOI: 10.1364/OL.40.000522 [extrait le 2015-02-06]**
• **MILDNER JUTTA ET AL: "Emission signal enhancement of laser ablation of metals (aluminum and titanium) by time delayed femtosecond double pulses from femtoseconds to nanoseconds", APPLIED SURFACE SCIENCE, vol. 302, 30 mai 2014 (2014-05-30), pages 291-298, XP028835200, ISSN: 0169-4332, DOI: 10.1016/J.APSUSC.2013.09.137**

## Description

### Domaine technique

La présente description concerne une source laser pour l'émission d'un groupe d'impulsions, par exemple un doublet ou un triplet d'impulsions, notamment pour la Spectroscopie par Plasma Induit par Laser (LIBS). La présente description concerne également un procédé de génération d'un groupe d'impulsions et un système d'analyse LIBS comprenant une telle source laser.

### Etat de l'art

La Spectroscopique par Plasma Induit par Laser (LIBS) est une technique d'analyse qualitative et quantitative de la composition chimique de différents matériaux solides, liquides gazeux ou en aérosols. La technique repose sur l'interaction d'une impulsion laser avec un matériau à analyser. L'interaction lumière/matière induit la vaporisation du matériau sous forme d'un plasma. Les atomes et les ions du matériau présents dans le plasma sont portés à des niveaux d'énergie excités et émettent, en se désexcitant, de la lumière présentant un spectre constitué de raies atomiques, dont les longueurs d'onde permettent d'identifier les éléments présents. L'intensité de chaque raie est proportionnelle à la concentration des atomes émetteurs. On en déduit ainsi la composition élémentaire du matériau.

Cependant, les caractéristiques de l'émission ne dépendent pas uniquement du matériau mais aussi de l'air ambiant ; des raies issues des atomes excités de l'air ambiant peuvent alors masquer des composés du matériau et rendre imprécise l'analyse du signal LIBS, en particulier dans le cas où les impulsions du laser utilisé sont nanosecondes. Pour pallier cet inconvénient, la LIBS peut utiliser des lasers à impulsions femtosecondes (<1 ps). L'utilisation d'impulsions femtosecondes permet de réduire l'interaction entre le gaz ambiant et les impulsions laser qui peut être à l'origine de l'émission d'un continuum. La réduction de l'émission du continuum permet d'obtenir un meilleur contraste des raies d'émission du plasma. L'utilisation d'impulsions femtosecondes permet également de minimiser les dimensions de la zone chauffée et les déformations mécaniques du matériau à analyser. Ceci se traduit par une meilleure résolution spatiale et un usinage précis ainsi qu'une meilleure reproductibilité de la mesure.

Cependant, les intensités des raies spectrales du plasma induit par les impulsions femtosecondes sont inférieures à celles produites par des impulsions nanosecondes. Même s'il a été démontré que les intensités des raies exploitables du plasma augmentent avec l'énergie des impulsions femtosecondes, le coût élevé des lasers ultrarapides de haute puissance et la complexité de leur technologie rendent difficile l'utilisation de cette technique en particulier en environnement industriel hors laboratoire.

Une tentative d'améliorer les performances de la LIBS utilisant des lasers à impulsions femto secondes est l'utilisation de la technique LIBS double impulsions (DP-LIBS) et plus précisément en configuration colinéaire. La DP-LIBS en configuration colinéaire consiste à utiliser deux impulsions colinéaires femtosecondes retardées entre elles de quelques dizaines de picosecondes à quelques nanosecondes. Ces deux impulsions interagissent avec le matériau à analyser pour permettre l'augmentation de l'intensité des raies atomiques. En général, la première impulsion permet d'ablater la matière à analyser et la deuxième impulsion sert à réchauffer le plasma induit ce qui se traduit par une exacerbation du signal LIBS conduisant à une amélioration du seuil de détectivité. L'article de revue de Labutin et al. « Femtosecond laser-induced breakdown spectroscopy », Journal of Analytical Atomic Spectrometry 31, pp. 90-118 (2016) recense les différentes configurations de DP-LIBS proposée avec leurs performances. Les études sur la DP-LIBS en régime femtoseconde montrent que le taux d'exacerbation obtenu est modéré en raison de la faible énergie d'échauffement engendrée par une impulsion femtoseconde. La solution a été apportée en combinant l'impulsion femtoseconde d'ablation avec une impulsion nanoseconde pour l'échauffement du plasma. Cette solution proposée pour la première fois dans l'article de Scaffidi et al., « Observations in collinear femtosecond-nanosecond dual pulse laser-induced breakdown spectroscopy » Applied Spectroscopy, 60, pp. 65- (2006) s'appuie sur la combinaison de deux impulsions provenant de deux sources laser différentes augmentant le coût et la complexité de mise œuvre. La présente description présente une source laser unique permettant de générer directement deux impulsions dissymétriques, par exemple une impulsion femtoseconde suivie d'une impulsion sub-nanoseconde, particulièrement adaptées pour l'exacerbation des signaux LIBS et permettant une meilleure sensibilité de l'analyse. Il est également fait référence aux documents suivants:

- KIENEL: "Multidimensional coherent pulse addition of ultrashort laser puises", Optics Letters, vol. 40, no. 4, 15 février 2015, pages 522-525;
- US 2009/080467 A1 (STARODOUMOV) 26 mars 2009;
- MILDNER: "Emission signal enhancement of laser ablation of metals (aluminum and titanium) by time delayed femtosecond double pulses from femtoseconds to nanoseconds", Applied Surface Science, vol. 302, pages 291-298.

RESUME

L'invention est définit par les caractéristiques techniques divulguées dans les revendications indépendantes 1 et 11. Des modes de réalisations préférés sont divulgués dans les revendications dépendantes.

Selon un premier aspect, la présente description concerne une source laser pour l'émission d'un groupe d'impulsions comprenant : une source laser primaire adaptée pour l'émission d'au moins une impulsion laser primaire ; un ou plusieurs interféromètres adaptés pour la formation, à partir de ladite impulsion laser primaire, d'une pluralité d'impulsions laser secondaires, chaque interféromètre comprenant au moins une ligne à retard permettant de séparer temporellement deux impulsions laser secondaires, d'un délai compris entre 50 ps et 10 ns ; et une fibre optique amplificatrice monomode destinée à recevoir les impulsions laser secondaires, pour former en sortie un groupe d'impulsions superposées spatialement. En outre, le ou lesdits interféromètres comprennent des moyens de mise en forme spectrale et/ou temporelle d'au moins une des impulsions laser secondaires.

La source laser ainsi décrite permet de générer un groupe d'impulsions colinéaires retardées les unes par rapport aux autres et superposées spatialement. Les déposants ont ainsi montré un taux de recouvrement spatial des impulsions supérieur à 90%, avantageusement supérieur à 95%, avantageusement supérieur à 99%. Le taux de recouvrement de deux ou plus de deux impulsions est par exemple défini à partir d'une fonction de corrélation croisée des images desdites impulsions, les images étant par exemple formées dans le plan focal d'une lentille de focalisation agencée en sortie de la fibre optique amplificatrice monomode. Les déposants ont montré que la fibre optique amplificatrice monomode de la source laser ainsi décrite joue le rôle de filtre spatial des impulsions laser secondaires en les projetant sur un mode unique en sortie de la fibre optique. Ainsi, la source laser permet d'assurer automatiquement un très bon recouvrement spatial entre les impulsions du groupe d'impulsions émises jusqu'à des distances de plusieurs mètres. Une telle source laser présente aussi l'avantage d'être compacte et de simplifier grandement le réglage des optiques des dispositifs décrits dans l'art antérieur.

Par « interféromètre », on comprend dans la présente description tout dispositif, fibré ou non, comprenant des moyens de séparation spatiale d'impulsions lumineuses incidentes, deux bras dans lesquels se propagent chacune des impulsions après séparation, et des moyens de recombinaison spatiale des impulsions après propagation ; et dans lequel un des bras forme une ligne à retard.

Selon l'invention, au moins un desdits interféromètres comprend des moyens de mise en forme spectrale et/ou temporelle d'au moins une des impulsions secondaires. Les moyens de mise en forme spectrale et/ou temporelle comprennent par exemple un filtre spectral et/ou un dispositif d'étirement temporel tel qu'un réseau de Bragg à pas variable.

Selon un ou plusieurs exemples de réalisation, au moins un desdits interféromètres comprend des moyens de contrôle de la puissance optique relative des impulsions laser secondaires. Les moyens de contrôle de la puissance optique comprennent par exemple un atténuateur variable agencé sur l'un des bras de l'interféromètre.

Il est ainsi possible de contrôler les puissances optiques, la durée d'impulsion et/ou le spectre de chacune des impulsions du groupe d'impulsions généré par la source laser. Dans le cas des mesures LIBS, ceci permet, par exemple, en fonction du matériau à analyser, ou encore du système de focalisation sur le matériau, d'ajuster les paramètres des impulsions pour optimiser la création du plasma nécessaire aux mesures LIBS.

Selon un ou plusieurs exemples de réalisation, la source laser comprend en outre :

- un étireur disposé en amont de la fibre optique amplificatrice monomode de telle sorte que l'impulsion laser primaire est étirée à une durée d'impulsion supérieure à 50 ps, et
- un compresseur en aval de la fibre optique amplificatrice monomode pour comprimer temporellement les impulsions du groupe d'impulsions de telle sorte que les impulsions du groupe d'impulsions présentent une durée d'impulsion inférieure à 500 fs.

Il est ainsi possible de générer un groupe d'impulsions à forte énergie sans endommager la fibre optique amplificatrice monomode ni de provoquer des effets non-linéaires dans la fibre optique amplificatrice monomode.

Selon un ou plusieurs exemples de réalisation, la source laser comprend en outre au moins un pré-amplificateur optique disposé en amont de la fibre optique amplificatrice monomode. Il est ainsi possible d'utiliser une source laser primaire fournissant des impulsions de plus faible énergie tout en garantissant la puissance optique nécessaire dans la fibre optique.

Selon un ou plusieurs exemples de réalisation, la source laser comprend en outre une diode laser pour pomper optiquement la fibre optique amplificatrice monomode.

Selon un ou plusieurs exemples de réalisation, la diode laser est disposée de manière à pomper optiquement la fibre optique amplificatrice monomode en régime contrapropagatif.

Selon un ou plusieurs exemples de réalisation, la fibre optique amplificatrice monomode est une fibre à filtrage modal.

Selon un ou plusieurs exemples de réalisation, la fibre optique amplificatrice monomode est une fibre barreau à large pas.

Selon un ou plusieurs exemples de réalisation, la fibre optique amplificatrice monomode est destinée à fonctionner en régime de gain saturé. Le régime de gain saturé permet de réduire la dépendance aux variations de l'environnement extérieur (variations mécaniques, thermiques...) de l'amplitude des impulsions générées, ce qui permet de rendre la source laser plus stable d'une mesure à l'autre. En effet, lorsque la fibre optique amplificatrice monomode fonctionnant en régime de gain saturé, une variation en intensité des impulsions ou une variation sur l'injection des impulsions laser secondaires dans la fibre ne modifie pas l'amplitude des impulsions du groupe d'impulsions en sortie de la fibre optique amplificatrice monomode.

Selon un ou plusieurs exemples de réalisation, pour réduire l'encombrement et simplifier les réglages optiques, le trajet des impulsions entre la source laser primaire et l'entrée de la fibre optique amplificatrice monomode est fibré.

Selon un ou plusieurs exemples de réalisation, la source laser primaire est adaptée à l'émission d'un train d'impulsions laser primaires séparées temporellement par un délai d'au moins 2 μs. Ainsi, la source laser primaire émet des impulsions laser primaires espacées temporellement entre elles d'un délai supérieure ou égale à 2 μs pour permettre l'émission de groupes d'impulsions qui seront séparés d'un délai supérieure ou égale à 2 μs. Ainsi, avantageusement, au cours d'une mesure LIBS, les ions excités du plasma pourront relaxer totalement entre deux groupes d'impulsions, ce qui diminuera le bruit.

Selon un ou plusieurs exemples de réalisation, l'impulsion laser primaire est subpicoseconde.

Selon un ou plusieurs exemples de réalisation, l'un ou moins des interféromètres est un interféromètre de type Mach Zehnder, la ligne à retard étant formée par un bras de l'interféromètre.

Selon un deuxième aspect, la présente description concerne un système d'analyse Spectroscopique par Plasma Induit par Laser (LIBS) comprenant une source laser pour l'émission d'un groupe d'impulsions telle que décrite selon le premier aspect; un collecteur pour collecter un faisceau résultant de l'interaction entre un objet à analyser et le groupe d'impulsions émis par la source laser; et un spectromètre permettant à partir de l'analyse spectrale du faisceau collecté, d'obtenir le spectre LIBS de l'objet à analyser.

Selon un troisième aspect, la présente description concerne un procédé de génération d'un groupe d'impulsions comprenant les étapes suivantes :

- une première étape d'émission d'au moins une impulsion laser primaire,
- une seconde étape de génération à partir de ladite impulsion primaire, d'une pluralité d'impulsions laser secondaires séparées temporellement d'un délai compris entre 50 ps et 10 ns, au moyen d'un ou plusieurs interféromètres,
- une troisième étape d'injection des impulsions lasers secondaires dans une fibre optique amplificatrice monomode pour former un groupe d'impulsions superposées spatialement, ladite étape de génération comprenant en outre une étape de mise en forme spectrale et/ou temporelle d'au moins une des impulsions laser secondaires.

Selon l'invention, l'étape de génération d'une pluralité d'impulsions laser secondaires comprend en outre l'étape de mise en forme spectrale et/ou temporelle d'au moins une des impulsions secondaires.

Selon un ou plusieurs exemples de réalisation, le procédé de génération d'un groupe d'impulsions comprend en outre les étapes suivantes:

- étirement temporel de l'impulsion laser primaire de telle sorte que l'impulsion laser primaire est étirée à une durée d'impulsion supérieure à 50 ps, et
- compression temporelle des impulsions du groupe d'impulsions superposées spatialement de telle sorte que les impulsions du groupe d'impulsions superposées spatialement présentent une durée d'impulsion inférieure à 500 fs.

Selon un ou plusieurs exemples de réalisation, le procédé de génération d'un groupe d'impulsions comprend en outre l'étape de saturation du gain de la fibre optique amplificatrice monomode.

Selon un ou plusieurs exemples de réalisation, le procédé de génération d'un groupe d'impulsions comprend en outre l'étape d'ajustement du délai entre les impulsions laser secondaires.

BREVE DESCRIPTION DES DESSINS

D'autres avantages et caractéristiques de l'objet de la description apparaîtront à la lecture de la description, illustrée par les figures suivantes :

FIG. 1, un schéma d'un système DP-LIBS en configuration colinéaire selon l'art antérieur (déjà décrit) ;

FIG. 2, un schéma d'une source laser pour l'émission d'un groupe d'impulsions selon un exemple de la présente description ;

FIG. 3, un schéma d'une source laser pour l'émission d'un groupe d'impulsions selon un exemple de la présente description comprenant un étireur et un compresseur;

FIG. 4, un schéma d'un autre exemple de source laser pour l'émission d'un groupe d'impulsions selon un exemple de la présente description, ladite source étant fibrée;

FIG. 5 et FIG. 6, des schémas d'une source laser pour l'émission d'un groupe d'impulsions composé de plus de deux impulsions selon des exemples de la présente description ;

FIG. 7, un schéma d'une source laser pour l'émission d'un groupe d'impulsions composé de plus de deux impulsions selon un exemple de la présente description, dans lequel la source laser est fibrée;

FIG. 8, un schéma d'un système d'analyse spectroscopique par LIBS selon un exemple de la présente description;

FIGS. 9A et 9B, des spectres caractéristiques de l'Aluminium obtenus en LIBS mono impulsion et en DP-LIBS en utilisant une source laser pour l'émission d'un groupe d'impulsions selon un exemple de la présente description, les impulsions de la source laser ayant respectivement un retard inter-impulsions de 50 ps et de 750 ps.

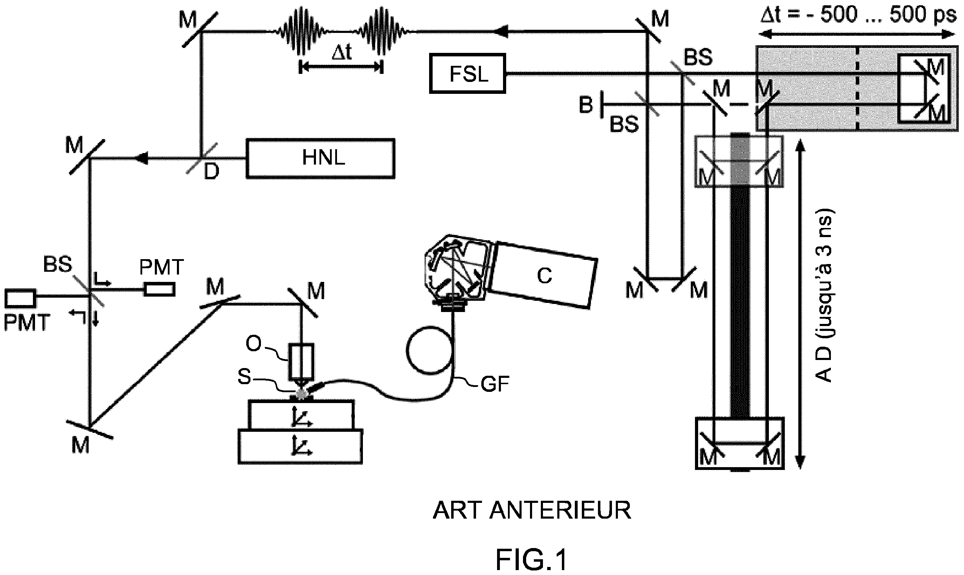

Ici, les figures 1 à 3 sont données à titre indicatif et ne présentent pas un mode de réalisation de l'invention.

DESCRIPTION DETAILLEE

Sur les figures, les éléments identiques sont repérés par les mêmes références.

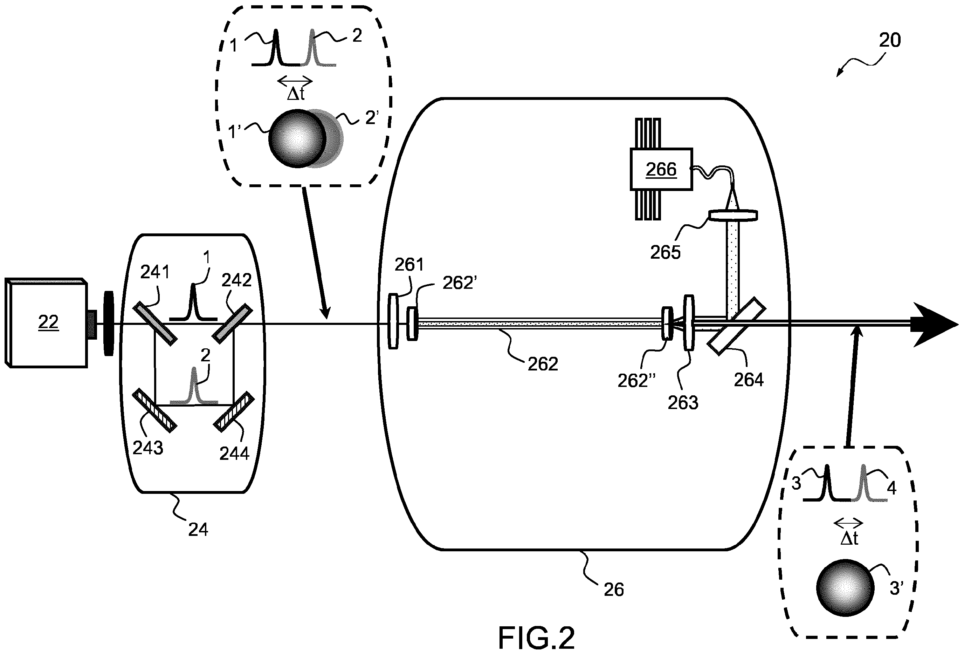

La FIG.2 illustre un premier exemple d'une source laser 20 pour l'émission d'un groupe d'impulsions selon la présente description. Elle comprend une source laser primaire 22, un interféromètre 24 adapté pour la formation de deux impulsions laser secondaires 1, 2, et un module d'amplification 26 comprenant une fibre optique amplificatrice monomode 262 destinée à recevoir lesdites impulsions laser secondaires 1, 2, pour former un groupe d'impulsions 3, 4 superposées spatialement.

Dans l'exemple montré sur la FIG.2, la source laser primaire 22 est par exemple adaptée pour l'émission d'au moins une impulsion laser primaire d'une durée par exemple subpicoseconde, par exemple sub-500 fs. Elle peut également émettre un train d'impulsions laser primaire avec une cadence ajustable comprise entre 1 kHz et 500 KHz. Dans ce cas, les impulsions sont espacées de 2 $\mu$s à 1 ms. La source laser primaire peut comprendre par exemple un laser à blocage de modes standard opérant à cadence fixe, par exemple de quelques dizaines de MHz, qui peut être suivi d'un sélecteur d'impulsions pouvant réduire la cadence de la source primaire par exemple à moins de 500 KHz. La source primaire peut inclure un préamplificateur pour compenser les pertes d'insertion dans le sélecteur d'impulsions.

Dans l'exemple de la FIG.2, la source laser comprend un interféromètre adapté pour la formation, à partir de l'impulsion laser primaire, de deux impulsions laser secondaires. La source laser peut également comprendre plusieurs interféromètres en série pour engendrer un groupement d'un nombre pair d'impulsions, comme cela sera décrit plus tard. Il est également possible d'imbriquer les interféromètres entre eux pour générer des groupements impairs d'impulsions.

Dans l'exemple de la FIG.2, l'interféromètre est de type Mach-Zehnder. Il comprend deux miroirs 243, 244 et deux miroirs semi-réfléchissants 241 et 242. A l'aide d'un miroir semi-réfléchissant 241, l'impulsion laser primaire est divisée en deux impulsions laser secondaires 1, 2 qui parcourent deux chemins optiques différents ; le chemin optique de l'impulsion 1 est allongé par rapport au chemin optique de l'impulsion 2 au moyen de deux miroirs réfléchissant 243, 244. Puis les deux impulsions laser secondaires sont recombinées à l'aide d'un miroir semi-réfléchissant 242. De cette façon, les deux impulsions laser secondaires sont séparées temporellement par un délai $\Delta t = \delta/c$ avec c la vitesse de propagation de la lumière et $\delta$ la différence entre les deux chemins optiques parcourues par les deux impulsions laser secondaires 1, 2. Ce délai peut être ajusté en modifiant la différence des chemins optiques $\delta$ et par conséquent la longueur d'un des chemins optiques. Pour modifier la différence des chemins optiques, il est possible par exemple de déplacer la position des deux miroirs 243 et 244. On peut noter que le délai $\Delta t$ est choisi supérieur ou égal à la durée de l'impulsion primaire de telle sorte que les deux impulsions laser secondaires 1, 2 ne puissent pas interférer entre elles.

Pour les mesures LIBS, le délai $\Delta t$ est de manière préférentielle ajustable entre une dizaine de picosecondes à quelques nanosecondes, par exemple entre 50 ps et 10 ns. Cela permet d'adapter le délai inter-impulsions pour optimiser le réchauffement du plasma produit par la première impulsion du doublet, délai qui varie d'un matériau à un autre.

L'interféromètre peut être également de type Michelson ou tout autre type d'interféromètre. Par exemple, un interféromètre de type Michelson peut comprendre deux miroirs et une lame séparatrice. L'impulsion laser primaire est envoyée sur la lame semi réfléchissante qui sépare l'impulsion primaire en deux impulsions laser secondaires. L'une d'elle est envoyée sur l'un des miroirs et l'autre sur l'autre miroir. Les deux miroirs sont à une distance différente de la lame séparatrice permettant ainsi d'introduire une différence δ de chemin optique et donc d'introduire un délai Δt entre les deux impulsions laser secondaires. Le déplacement de la position des miroirs permet d'ajuster le délai entre les deux impulsions laser secondaires.

Selon un ou plusieurs exemples de réalisation, l'interféromètre est fibré et dans ce cas, il peut comprendre par exemple une ou des fibres optiques agencées autour d'un tambour piézoélectrique, comme cela sera décrit par la suite.

Comme illustré sur la FIG.2, à la sortie de l'interféromètre 24, les répartitions spatiales d'énergie des deux impulsions laser secondaires 1, 2 (référencées l' et 2') ne sont pas parfaitement superposées spatialement. En effet, il réside un décalage dû à la difficulté d'alignement de l'interféromètre et aux perturbations liées à l'environnement

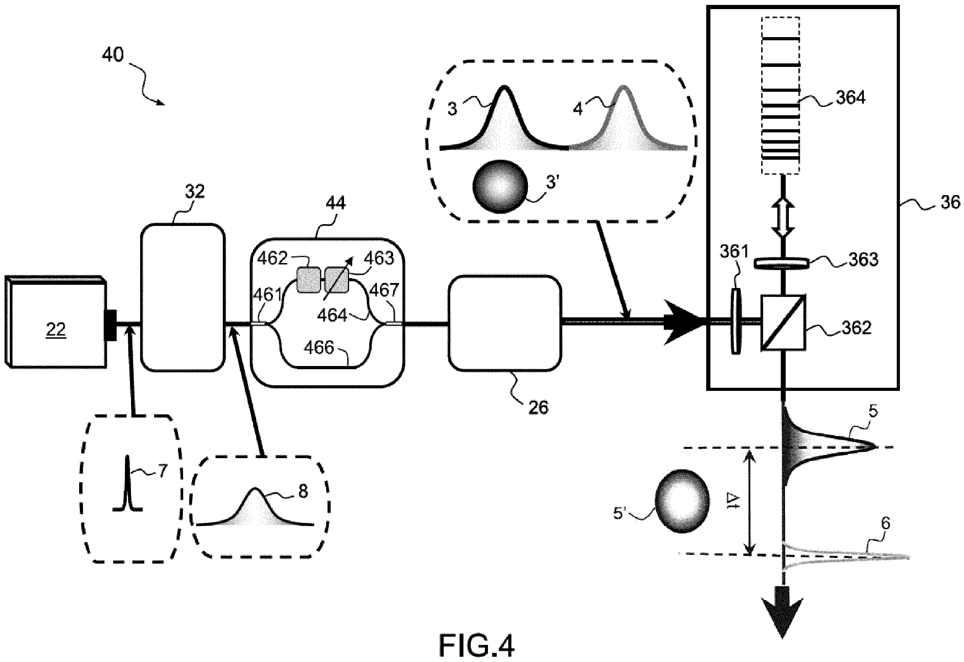

Les deux impulsions laser secondaires sont ensuite injectées dans un module d'amplification 26. Le module d'amplification comprend une fibre optique amplificatrice monomode 262 dans laquelle sont couplées les impulsions laser secondaires 1, 2 à l'aide par exemple d'une lentille 261 ou par épissure (par soudage de deux fibres) dans le cas d'une configuration fibrée monolithique (voir FIG.4). La lentille 261 permet ainsi de coupler les impulsions laser secondaires avec le mode unique de la fibre amplificatrice monomode. Il est également possible d'utiliser des embouts 262' et 262" de verre soudés aux extrémités de la fibre pour élargir la taille du faisceau en sortie et ainsi repousser le seuil de dommage optique à de fortes intensités.

Le mode d'un guide d'onde - telle qu'une fibre optique monomode - indique la manière dont se propage la lumière au sein du guide. Dans une fibre monomode, il n'y a qu'un seul mode de propagation. Le caractère monomode de la fibre optique amplificatrice monomode assure ainsi une superposition spatiale des impulsions laser secondaires en sortie de la fibre optique amplificatrice monomode. En d'autres termes, la fibre optique amplificatrice monomode joue un rôle de filtre spatial en projetant les deux impulsions laser secondaires sur un mode unique et ainsi en « nettoyant » les impulsions laser secondaires selon le mode unique de la fibre. Les déposants ont montré qu'un taux de recouvrement spatial supérieur à 90% et davantage pouvait ainsi être obtenu entre les impulsions du groupe d'impulsions ainsi formé.

Le recouvrement spatial des impulsions peut par exemple être mesuré au moyen d'une fonction de corrélation croisée des images des impulsions formées dans le plan focal d'une lentille de focalisation agencée en aval de la fibre optique amplificatrice monomode. Par exemple, on calcule la fonction de corrélation croisée $r(u, v)$ entre les deux images des faisceaux formés au foyer d'une lentille de focalisation placée en sortie de la fibre amplificatrice monomode. Cette fonction est donnée par l'équation :

$$r(u, v) = \frac{\sum_{x,y}\left[\left(f(x,y) - \bar{f}\right) * \left(g(x - u, y - v) - \bar{g}\right)\right]}{\sum_{x,y}\sqrt{\left(f(x,y) - \bar{f}\right)^2} \sum_{x,y}\sqrt{\left(g(x - u, y - v) - \bar{g}\right)^2}}$$

Où $f(x, y)$ et $g(x, y)$ sont les images correspondant aux deux impulsions du doublet et $\bar{f}$ et $\bar{g}$ les intensités moyennes des deux images. La valeur maximale de la fonction « r » donne le degré de ressemblance entre les deux images qui est d'autant meilleure quand le degré de ressemblance est proche de 1. Par ailleurs, la position du pic maximal de «r» indique le degré de recouvrement entre les deux images. Le recouvrement est d'autant meilleur que le maximum est centré sur le point de coordonnées $u = 0, v = 0$. Ainsi, on pourra rechercher une fonction de corrélation croisée « r » présentant un pic dont la valeur maximale est proche de 1, par exemple supérieure à 0.99, et centré au point de coordonnées (0, 0) ou à proximité du point de coordonnées (0, 0).

La fibre optique amplificatrice monomode permet également d'amplifier l'intensité des impulsions laser secondaires et permet ainsi l'utilisation d'une source laser primaire peu puissante.

La fibre amplificatrice monomode peut être pompée optiquement avec un faisceau lumineux émis par un moyen de pompage tel qu'une diode ou un laser afin de provoquer l'inversion de population. Lorsque les impulsions laser secondaires passent à travers la fibre optique amplificatrice monomode, leurs intensités sont décuplées par l'effet d'émission stimulée induit par les ions actifs. Des gains totaux sur toute la longueur de la fibre active de 20 à 30 dB peuvent être ainsi atteints.

Les intensités des impulsions secondaires à l'entrée de la fibre optique amplificatrice monomode sont réglées de façon à assurer préférentiellement un fonctionnement en régime de gain saturé de ce dernier. L'ajustement de l'intensité des impulsions à l'entrée de la fibre optique amplificatrice monomode est assuré en amont par la source primaire ou en insérant un préamplificateur. Le régime de gain saturé a l'avantage de rendre la source laser peu sensible à l'environnement extérieur. En particulier, au cours du fonctionnement de la source laser en espace libre, les amplitudes des impulsions amplifiées seront moins sensibles aux variations de l'environnement extérieur (variations mécaniques, thermiques...) et donc plus stables d'une mesure à l'autre. Ainsi lorsque la fibre optique amplificatrice monomode fonctionne en régime de gain saturé, une variation en intensité ou une variation sur l'injection des impulsions laser secondaires dans la fibre ne modifiera pas la superposition spatiale des impulsions ni l'intensité des impulsions du groupe d'impulsions en sortie de la fibre optique amplificatrice monomode.

Comme illustré sur la FIG.2, le module d'amplification 26 peut comprendre une diode laser 266 pour réaliser l'inversion de population dans ladite fibre amplificatrice monomode 262. Pour cela un faisceau lumineux de pompage est émis par la diode 266 et injecté dans la fibre optique à l'aide d'éléments transmetteurs tel que des lentilles 265 et 266 et un miroir 264. Le faisceau lumineux de pompage peut être injecté dans la fibre optique amplificatrice monomode de manière contrapropagative, c'est à dire en sortie de la fibre optique 262" ou de manière copropagative, c'est-à-dire en entrée de la fibre optique 262'.

La fibre optique amplificatrice monomode est par exemple une fibre double gaine à cœur dopé avec des ions actifs telles que des terres rares (par exemple Erbium, Néodyme, Ytterbium, Thulium, Praséodyme, Holmium) ; la fibre optique amplificatrice monomode peut être une fibre dopée à large aire modale ou une fibre à filtrage modal distribué assurant un comportement monomode avec un diamètre de cœur allant par exemple jusqu'à 80 $\mu$m, ou encore une fibre barreau à large pas (LPF). La fibre optique amplificatrice monomode supporte un mode unique et présente avantageusement une longueur suffisante pour produire un gain total compris entre 20 et 30 dB.

Dans le cas d'une fibre optique amplificatrice monomode avec un cœur dopé aux ions ytterbium opérant à la longueur d'onde de 1$\mu$m, des diodes de pompage émettant à 915 ou 976 nm peuvent être par exemple utilisées.

Sur la FIG.2, les impulsions laser secondaires 3, 4 en sortie de la fibre optique sont ensuite collectées à l'aide par exemple d'une lentille 263. Les répartitions spatiales d'énergie (3') des impulsions laser secondaires 3 et 4 sont maintenant colinéaires et superposés spatialement comme illustré dans l'encart de droite de la FIG.2. Par ailleurs, du fait du régime en gain saturé de l'exemple de la FIG.2, les intensités des impulsions laser secondaires 3, 4 en sortie de la fibre optique sont sensiblement identiques.

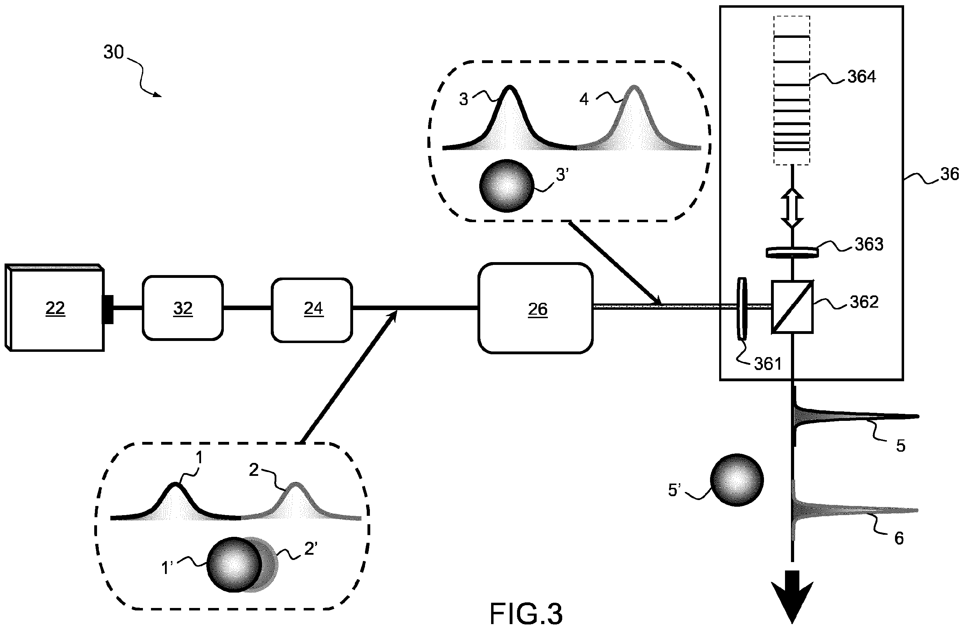

La FIG.3 présente un autre exemple de source laser selon la présente description. La source laser 30 de la FIG.3 comprend par exemple une source laser primaire 22, un étireur d'impulsions 32, un ou plusieurs interféromètre(s) (sur la FIG.3 un seul interféromètre 24 est représenté), un module d'amplification 26 comprenant une fibre optique amplificatrice monomode et un compresseur d'impulsions 36.

L'exemple de la FIG.3 présente l'avantage en outre de former un groupe d'impulsions de forte intensité tout en diminuant les risques d'endommagement de la fibre ou de génération d'effets non-linéaires qui peuvent engendrer la dégradation des impulsions en sortie de la fibre.

La source laser primaire 22 est adaptée pour l'émission d'au moins une impulsion laser primaire d'une durée subpicoseconde. L'impulsion laser primaire est envoyée dans un étireur d'impulsions 32 pour étirer temporellement l'impulsion laser primaire de telle sorte que l'impulsion laser primaire présente une durée d'impulsion supérieure à 50 ps. L'étirement temporel de l'impulsion primaire va diminuer sa puissance crête d'un facteur allant de 50 à plus de 1000. L'étireur peut être disposé en amont de la fibre optique amplificatrice monomode. Dans l'exemple de la FIG.3, l'étireur 23 est disposé en amont de l'interféromètre 24. L'impulsion laser primaire étirée suit ensuite le même parcours jusqu'à la sortie de la fibre optique amplificatrice monomode que celui de l'impulsion laser primaire de la FIG.2.

En aval de la fibre optique amplificatrice monomode, les impulsions lasers secondaires indiscernables spatialement sont envoyées dans un compresseur d'impulsions 36. Le compresseur d'impulsions permet de comprimer temporellement les impulsions lasers secondaires de telle que sorte que les durées des impulsions laser secondaires sont subpicosecondes comme en sortie de la source primaire. La compression temporelle des impulsions laser secondaires amplifiées engendre une forte montée en puissance crête des impulsions laser secondaires superposées spatialement.

L'étireur est par exemple de type réseau massif. Il peut s'agir d'une fibre optique à dispersion normale ou d'un réseau de Bragg à pas variable photo-inscrit sur fibre optique ou dans un verre massif.

Le compresseur peut comprendre comme illustré sur la FIG.3, une lame demi onde 361 pour modifier l'orientation de la polarisation linéaire des impulsions secondaires amplifiées, un cube séparateur de polarisation 362 pour réfléchir les impulsions laser secondaires vers un réseau de Bragg volumique à pas variable 364 en passant par une lame quart d'onde pour transformer la polarisation linéaire en polarisation circulaire. Les impulsions laser secondaires qui sont totalement réfléchies par le réseau de Bragg volumique à pas variable voient leurs durées diminuer à une valeur sub-picoseconde proche de la durée de l'impulsion primaire. Les impulsions secondaires comprimées sont dirigées vers la sortie de la source laser par les actions combinées de la lame quart d'onde et du séparateur de polarisation pour émettre des impulsions laser secondaires spatialement superposées avec une durée d'impulsion inférieure à 500 fs et une puissance crête supérieure à 2 MW. D'autres types de compresseur peuvent être utilisés comme une paire de réseaux de diffraction.

La FIG.4 présente un exemple de source laser selon un exemple de la présente description dans lequel la source laser est fibrée. Dans cet exemple, on a également représenté un étireur 32 et un compresseur 36, mais ces éléments sont optionnels. L'étireur 32 est disposé en amont d'un interféromètre fibré 44 et le compresseur 36 est disposé en aval du module d'amplification 26. Dans cet exemple, le parcours des impulsions entre la source laser primaire 22 et le module d'amplification 26 est entièrement fibré. De même, l'interféromètre 44 est entièrement fibré. Dans ce cas, l'interféromètre peut comprendre au moins une ligne à retard 463 motorisée pouvant être disposée sur un système fibré et permettant d'obtenir un délai supérieur à 500ps. Les éléments 461 et 467 sont des coupleurs à fibres optiques. L'impulsion primaire est séparée en deux impulsions par le coupleur à fibre monomode 461. Après propagation dans les deux bras de l'interféromètre, ces dernières sont recombinées dans le coupleur 467.

Dans le cas d'une source laser fibrée avec un étireur, il peut être avantageux de disposer l'étireur 32 en amont de l'interféromètre 44 afin de limiter les distorsions des impulsions lors de leur propagation dans l'interféromètre à fibre par les effets non-linéaires.

Dans l'exemple de la FIG.4, sont également représentés des moyens de mise en forme spectrale ou temporelle 462. Le système de mise en forme spectrale peut être constitué d'un filtre spectral (filtre passe bande diélectrique ou à réseau de Bragg à pas fixe). La mise en forme temporelle peut être réalisée par exemple avec un étireur à réseau de Bragg à pas variable. Bien entendu de tels moyens peuvent être intégrés à n'importe quel bras d'un interféromètre (y compris non fibré) pour pouvoir par exemple générer des impulsions lasers secondaires asymétriques en durée et en puissance. Cette configuration a l'avantage d'améliorer la sensibilité des mesures LIBS. Par exemple dans le cas ou deux impulsions asymétriques sont émises par la source laser, la première impulsion de forte puissance crête et de courte durée sert à ablater le matériau à analyser et la deuxième impulsion fortement étirée et de moindre puissance crête sert à chauffer le plasma formé par la première impulsion du groupe.

Notons qu'un ou plusieurs préamplificateurs tout fibrés peuvent être utilisés en amont de la fibre optique amplificatrice monomode pour assurer son fonctionnement en régime de gain saturé. Par ailleurs, le couplage des impulsions secondaires dans la fibre optique amplificatrice monomode peut être réalisée par épissure (par soudage) permettant de conférer au système une architecture monolithique de la source primaire jusqu'à l'étage de compression. Par exemple, sur le mode de réalisation de la FIG.4, il est possible de disposer un préamplificateur en amont de la fibre optique amplificatrice monomode afin d'ajuster le niveau de puissance à la saturation du gain dans la fibre.

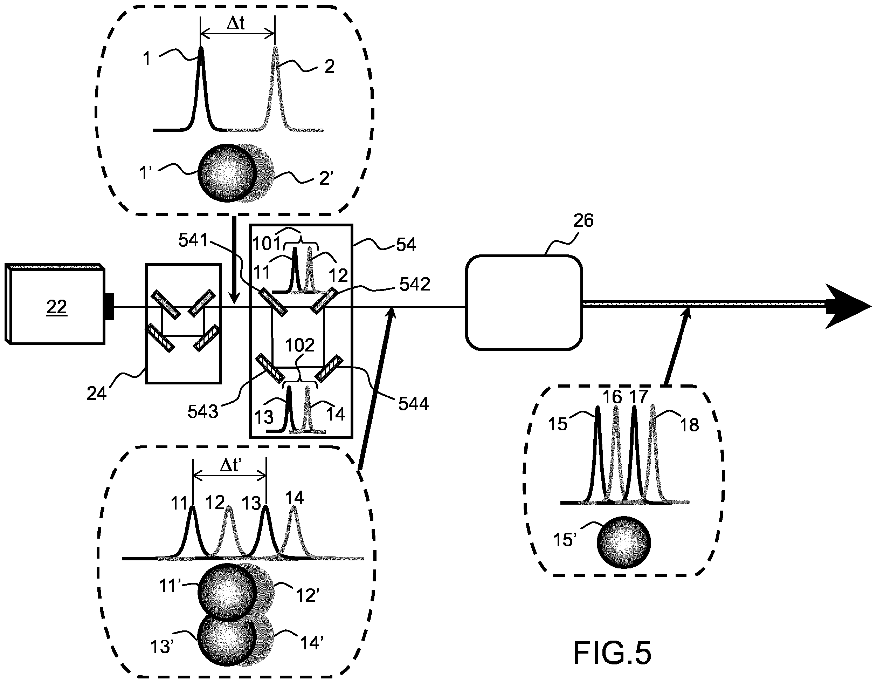

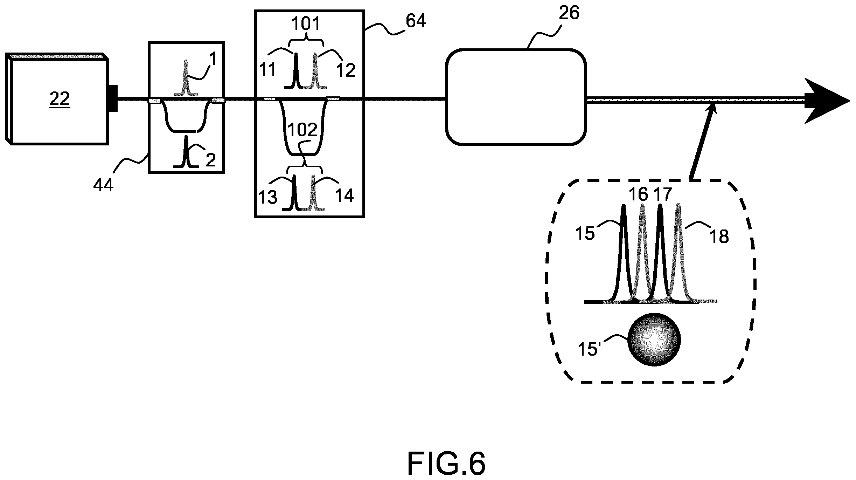

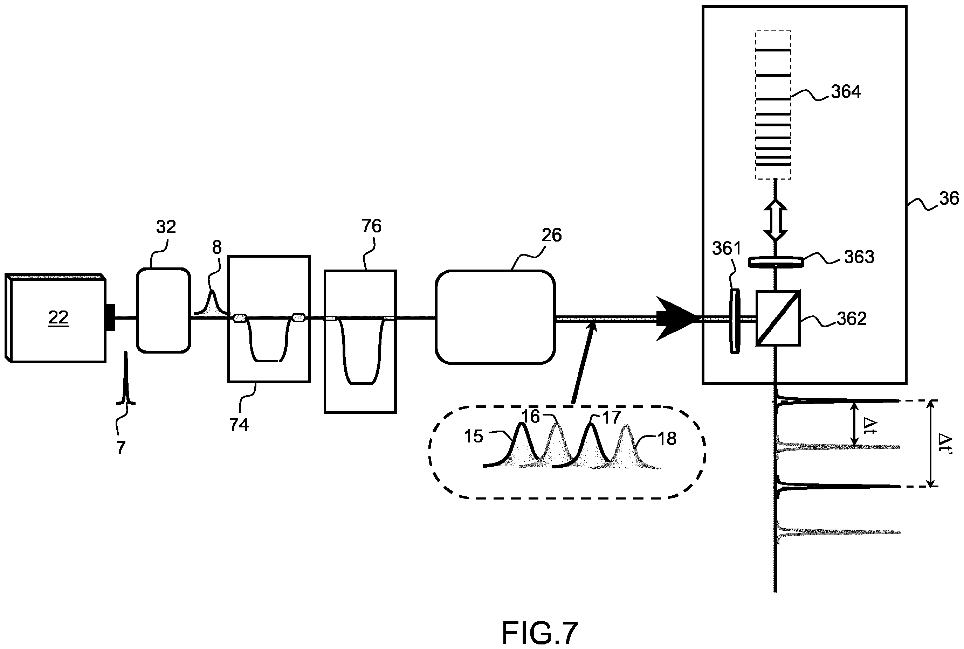

Les FIG.5, FIG.6 et FIG.7 présentent d'autres exemples de réalisation dans lesquels la source peut émettre un groupe de plus deux impulsions tel qu'un triplet ou encore un quadruplet. Pour cela, la source laser peut comprendre plusieurs interféromètres disposés en série pour générer des groupements pairs (FIG.5, FIG.6 FIG.7) ou imbriqués les uns dans les autres pour générer des groupements impairs.

Sur la FIG.5, la source laser selon un exemple de la présente description comprend deux interféromètres en série. A la sortie du premier interféromètre 24, deux impulsions laser secondaires 1, 2 sont générées. Les deux impulsions laser secondaires 1, 2 sont envoyées dans un deuxième interféromètre 54, par exemple de type Mach-Zehnder. Le deuxième interféromètre 54 peut comprendre, comme le premier interféromètre 24, deux miroirs totalement réfléchissants 543, 544 et deux miroirs semi-réfléchissants 541 et 542. A l'aide d'un miroir semi-réfléchissant 541, les deux impulsions laser secondaires issues du premier interféromètre sont divisées en deux paquets de deux impulsions laser secondaires 11, 12 et 13, 14 qui parcourent deux chemins optiques différents. Puis à l'aide des deux miroirs réfléchissants 543, 544, le chemin optique des impulsions laser secondaires 13 et 14 est allongé par rapport au chemin optique des impulsions laser secondaires 11 et 12. Le miroir semi-réfléchissant 542 permet de combiner les quatre impulsions laser secondaires pour former un groupe d'impulsions composé des quatre impulsions laser secondaires. La répartition spatiale 11', 12', 13' et 14' de l'énergie des impulsions est représentée sur l'encart en bas à gauche de la FIG.5. Les impulsions laser secondaires 11, 12 d'une part et 13, 14 d'autre part, sont séparées par un délai $\Delta t$ calibré par le premier interféromètre 24. Le paquet d'impulsions 11, 12 est décalé temporellement par rapport au paquet d'impulsion 13, 14 d'un délai $\Delta t'$ calibré par le deuxième interféromètre 54. Les quatre impulsions laser secondaires sont ensuite envoyées dans le module d'amplification 26 comprenant la fibre optique amplificatrice monomode pour former un groupe de quatre impulsions superposées spatialement 15, 16, 17, 18 comme illustré sur l'encart en bas à droite de la FIG.5.

Bien évidemment, en fonction des besoins, il est possible d'insérer plus de deux interféromètres dans la source laser selon la présente description.

La FIG.6 représente un exemple selon la présente description d'une source laser fibrée pour l'émission d'un groupe de quatre impulsions. Dans cet exemple, on retrouve les éléments de la FIG.4 : la source laser primaire 22, le première interféromètre fibré 44 et le module amplificateur 26 comprenant la fibre amplificatrice monomode ; cet exemple illustre le cas de deux interféromètres fibrés 44, 64, agencés en série, pour former un groupe de 4 impulsions. Le fonctionnement est similaire à celui de l'exemple de la FIG.5 ; de même les éléments fibrés sont similaires à ceux de la FIG.4. En effet, tout le trajet optique de la source laser primaire à l'entrée de la fibre optique amplificatrice monomode est fibré.

Selon un ou plusieurs modes de réalisations, un ou plusieurs préamplificateurs fibrés ou non peuvent être utilisés en amont de la fibre optique amplificatrice monomode pour assurer son fonctionnement en régime de gain saturé.

La FIG.7 représente un exemple selon la présente description d'un schéma d'une source laser fibrée pour l'émission d'un groupe de quatre impulsions comprenant en outre un étireur 32 placé après la sources primaire 22, avant un premier interféromètre 74 et un compresseur 36 placé en aval du module d'amplification 26 comprenant la fibre optique amplificatrice monomode. Le fonctionnement est identique à celui de la FIG.3. Il peut y avoir également un deuxième interféromètre 76, comme cela est illustré sur la figure.

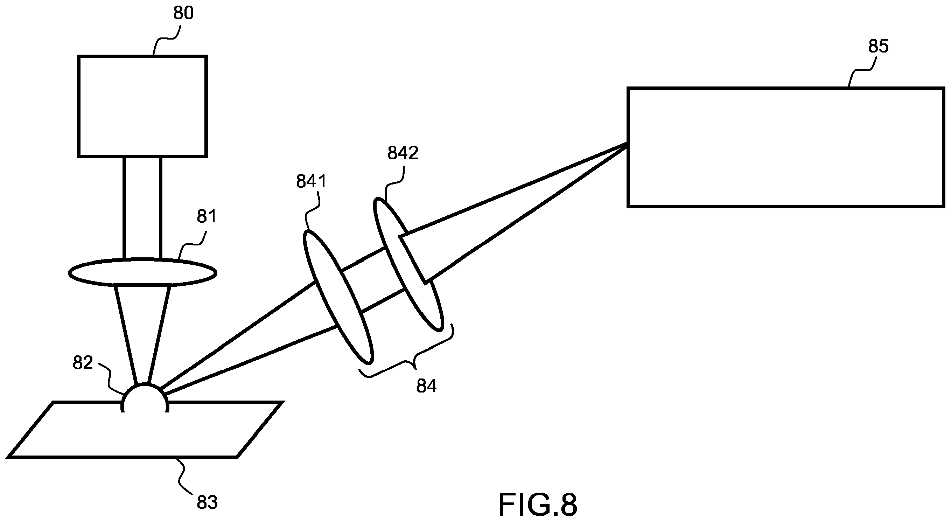

La source laser selon la présente description est parfaitement adaptée pour les mesures LIBS. La FIG. 8 illustre un exemple de système d'analyse spectroscopique par LIBS selon la présente description. Le système d'analyse spectroscopique par LIBS comprend une source laser 80 selon la présente description pour l'émission d'un groupe d'impulsions. Le groupe d'impulsions est focalisé sur un échantillon 83 à analyser à l'aide par exemple d'une lentille 81. L'interaction entre le groupe d'impulsions et l'échantillon 83 va générer dans un premier temps un plasma 82 puis dans un deuxième temps un rayonnement lumineux. Une fraction du rayonnement émis est collectée par un système optique 84 tel que par exemple un doublet de lentilles 841, 842. Le faisceau est ensuite détecté par un spectromètre 85 permettant à partir de l'analyse spectrale du rayonnement collecté d'obtenir le spectre LIBS de l'objet à analyser.

Selon un ou plusieurs exemples de la présente description, la source laser émet des trains de groupes d'impulsions, il est possible ainsi de réaliser des mesures LIBS moyennées sur plusieurs tirs.

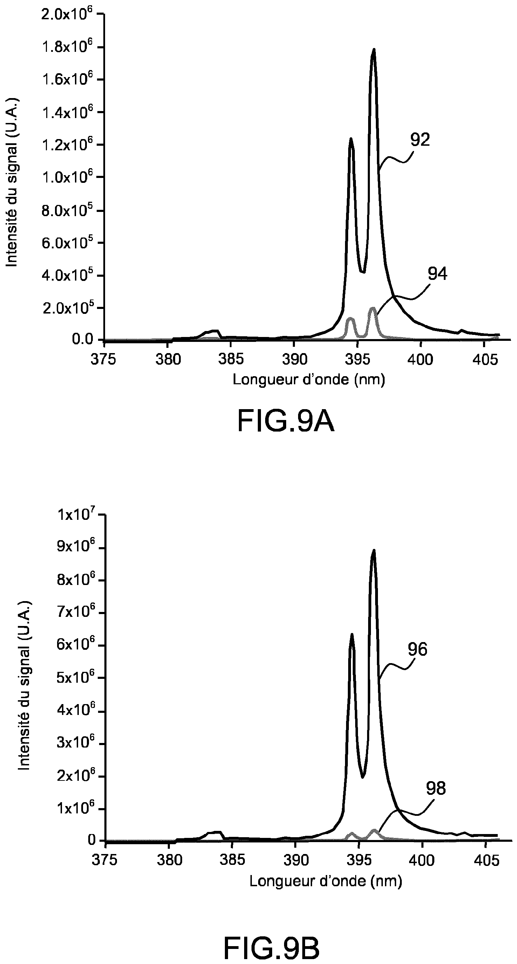

Les FIG.9A et FIG.9B présentent des spectres obtenus avec un système d'analyse spectroscopique par LIBS selon la présente description. Le système d'analyse comprend dans cet exemple une source laser pour l'émission de doublets d'impulsions, telle que représentée sur la FIG. 2. La source laser primaire comprend un laser à fibre à verrouillage de modes émettant des impulsions de 500 fs de durée à la cadence de 18 MHz à la longueur d'onde de 1040nm. Il est suivi d'un modulateur acousto-optique pour diviser la cadence par un facteur de plus de 40 et d'un préamplificateur à fibre pour assurer la saturation de l'amplificateur de puissance. Un interféromètre de Mach Zehnder à base de miroirs comme sur la FIG. 2 est utilisé pour générer deux impulsions secondaires séparées d'un délai compris entre 50 ps et 10 ns. La fibre optique amplificatrice est une fibre microstructurée de type barreau dont le cœur de $80 \mu m$ de diamètre est dopé avec des ions ytterbium. La fibre est pompée en contrapropagation par un faisceau laser centré à 976 nm provenant d'une diode laser fibrée. Les spectres 92 et 96 correspondent aux spectres d'émission du plasma d'ablation d'un échantillon en aluminium dans la gamme spectrale 375-405 nm obtenus en régime double-impulsion pour un retard de 50 ps pour la FIG. 9A et de 750 ps pour la FIG. 9B. Ces spectres sont comparés aux spectres 94, 98 (identiques) obtenus en régime mono-impulsion. Le régime mono-impulsion consiste à faire interagir une seule impulsion avec l'échantillon à analyser en bloquant un des bras de l'interféromètre. Il est à noter que l'énergie totale envoyée sur l'échantillon à analyser dans ces expériences est maintenue constante d'une expérience à l'autre. En particulier, elle est fixée à 2 $\mu$J par impulsion dans le cas de la LIBS mono-impulsion et à 1$\mu$J par impulsion dans le cas de la DP-LIBS, ce qui correspond à un total de 2$\mu$J également. Les spectres mesurés font ressortir les deux raies principales connues pour l'aluminium et qui sont centrées à 394.40 nm et 396.15 nm. Par rapport aux mesures en régime LIBS mono-impulsion, la sensibilité de détection de ces raies augmente d'un facteur 10 en DP-LIBS pour un délai inter-impulsion de 50 ps et d'un facteur 20 pour un délai de 750 ps.

Bien que décrite à travers un certain nombre d'exemples de réalisation, la source laser pour l'émission d'un groupe d'impulsions, le Système d'analyse Spectroscopique par Plasma Induit par Laser et le Procédé de génération d'un groupe d'impulsions comprennent différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

## Revendications

**1.**    Source laser pour l'émission d'un groupe d'impulsions comprenant :

- une source laser primaire (22) adaptée pour l'émission d'au moins une impulsion laser primaire,
- un ou plusieurs interféromètres (24, 44, 54, 64, 74, 76) adaptés pour la formation, à partir de ladite impulsion laser primaire, d'une pluralité d'impulsions laser secondaires (1, 2, 11, 12, 13, 14), chaque interféromètre comprenant au moins une ligne à retard permettant de séparer temporellement deux impulsions laser secondaires d'un délai ($\Delta$t, $\Delta$t') compris entre 50 ps et 10 ns,
- une fibre optique amplificatrice monomode (262) destinée à recevoir la dite pluralités d'impulsions laser secondaires, pour former en sortie un groupe d'impulsions (3, 4, 15, 16, 17, 18) superposées spatialement, **caractérisé en ce que**:

- le ou lesdits interféromètres comprennent des moyens de mise en forme spectrale et/ou temporelle d'au moins une des impulsions laser secondaires.

**2.**    Source laser selon l'une quelconque des revendications précédentes, dans laquelle au moins un desdits interféromètres comprend des moyens pour le contrôle de la puissance optique relative des impulsions laser secondaires.

**3.**    Source laser selon l'une quelconque des revendications précédentes, comprenant en outre :

- un étireur (32) disposé en amont de la fibre optique amplificatrice monomode de telle sorte que l'impulsion laser primaire est étirée à une durée d'impulsion supérieure à 50 ps, et
- un compresseur (36) en aval de la fibre optique amplificatrice monomode pour comprimer temporellement les impulsions du groupe d'impulsions de telle sorte que les impulsions du groupe d'impulsions présentent une durée d'impulsion inférieure à 500 fs.

4. Source laser selon l'une quelconque des revendications précédentes, comprenant en outre:
au moins un pré amplificateur optique disposé en amont de la fibre optique amplificatrice.

5. Source laser selon l'une quelconque des revendications précédentes, comprenant :
une diode laser (266) pour pomper optiquement la fibre optique amplificatrice monomode (262).

6. Source laser selon l'une quelconque des revendications précédentes, dans laquelle la fibre optique amplificatrice monomode est destinée à fonctionner en régime de gain saturé.

7. Source laser selon l'une quelconque des revendications précédentes, dans laquelle le trajet de ladite au moins une impulsion laser primaire et des impulsions laser secondaires entre la source laser primaire et l'entrée de la fibre optique amplificatrice monomode est fibré.

8. Source laser selon l'une quelconque des revendications précédentes, dans laquelle la source laser primaire (22) est adaptée à l'émission d'un train d'impulsions laser primaires séparées temporellement par un délai d'au moins 2 $\mu$s.

9. Source laser selon l'une quelconque des revendications précédentes, dans laquelle le ou les dits interféromètres (24, 44, 54, 64, 74, 76) comprend au moins un interféromètre de type Mach-Zehnder, la ligne à retard étant formée par un bras de l'interféromètre.

10. Système d'analyse Spectroscopique par Plasma Induit par Laser (LIBS) comprenant :

   - une source laser (80) pour l'émission d'un groupe d'impulsions selon l'une quelconque des revendications précédentes,
   - un collecteur (84) pour collecter un faisceau résultant de l'interaction entre un objet (83) à analyser et le groupe d'impulsions émis par la source laser; et
   - un spectromètre (85) permettant à partir de l'analyse spectrale du faisceau collecté, d'obtenir le spectre LIBS de l'objet à analyser.

11. Procédé de génération d'un groupe d'impulsions comprenant les étapes suivantes :

   - une première étape d' émission d'au moins une impulsion laser primaire,
   - une seconde étape de génération à partir de ladite impulsion primaire d'une pluralité d'impulsions laser secondaires (1, 2, 11, 12, 13, 14) séparées temporellement d'un délai compris entre 50 ps et 10 ns, au moyen d'un ou plusieurs interféromètres (24, 44, 54, 64, 74, 76),
   - une troisième étape d' injection des impulsions lasers secondaires dans une fibre optique amplificatrice monomode (262) pour former un groupe d'impulsions (3, 4, 15, 16, 17, 18) superposées spatialement, **caractérisé en ce que** :

      - la seconde étape de génération comprenne en outre une étape de mise en forme spectrale et/ou temporelle d'au moins une des impulsions laser secondaires.

12. Procédé de génération d'un groupe d'impulsions selon la revendication 11, comprenant en outre les étapes suivantes:

   - étirement temporel de l'impulsion laser primaire de telle sorte que l'impulsion laser primaire est étirée à une durée d'impulsion supérieure à 50 ps, et
   - compression temporelle des impulsions du groupe d'impulsions superposées spatialement de telle sorte que les impulsions du groupe d'impulsions superposées spatialement présentent une durée d'impulsion inférieure à 500 fs.

13. Procédé de génération d'un groupe d'impulsions selon l'une quelconque des revendications 11 à 12, comprenant en outre une saturation du gain de la fibre optique amplificatrice monomode.

14. Procédé de génération d'un groupe d'impulsions selon l'une quelconque des revendications 11 à 13, comprenant en outre un ajustement du délai entre les impulsions laser secondaires.

**Patentansprüche**

1. Laserquelle zum Emittieren einer Gruppe von Impulsen, die Folgendes umfasst:

   - eine primäre Laserquelle (22), ausgelegt zum Emittieren mindestens eines primären Laserimpulses,
   - ein oder mehrere Interferometer (24, 44, 54, 64, 74, 76), ausgelegt zum Bilden, auf der Basis des primären Laserimpulses, einer Vielzahl von sekundären Laserimpulsen (1, 2, 11, 12, 13, 14), wobei jedes Interferometer mindestens eine Verzögerungsleitung umfasst, die es ermöglicht, zwei sekundäre Laserimpulse mit einer Verzögerung ($\Delta t$, $\Delta t'$) zwischen 50 ps und 10 ns zeitlich zu trennen,
   - eine verstärkende Einmoden-Lichtleitfaser (262) die dazu bestimmt ist, die Vielzahl von sekundären Laserimpulsen zu empfangen, um am Ausgang eine Gruppe von räumlich überlagerten Impulsen (3, 4, 15, 16, 17, 18) zu bilden, **dadurch gekennzeichnet, dass**:
   - das/die Interferometer Mittel zur spektralen und/oder zeitlichen Formung von mindestens einem der sekundären Laserimpulse umfasst/-en.

2. Laserquelle nach dem vorhergehenden Anspruch, wobei mindestens eines der Interferometer Mittel zum Kontrollieren der relativen optischen Leistung der sekundären Laserimpulse umfasst.

3. Laserquelle nach einem der vorhergehenden Ansprüche, die ferner Folgendes umfasst:

   - einen Strecker (32), der stromaufwärts der verstärkenden Einmoden-Lichtleitfaser angeordnet ist, so dass der primäre Laserimpuls auf eine Impulsdauer von mehr als 50 ps gestreckt wird, und
   - einen Kompressor (36) stromabwärts der verstärkenden Einmoden-Lichtleitfaser zum zeitlichen Komprimieren der Impulse der Impulsgruppe, so dass die Impulse der Impulsgruppe eine Impulsdauer von weniger als 500 fs haben.

4. Laserquelle nach einem der vorhergehenden Ansprüche, die ferner Folgendes umfasst:
   mindestens einen optischen Vorverstärker, der stromaufwärts der verstärkenden Lichtleitfaser angeordnet ist.

5. Laserquelle nach einem der vorhergehenden Ansprüche, die Folgendes umfasst:
   eine Laserdiode (266) zum optischen Pumpen der verstärkenden Einmoden-Lichtleitfaser (262).

6. Laserquelle nach einem der vorhergehenden Ansprüche, wobei die verstärkende Einmoden-Lichtleitfaser zum Arbeiten im Betrieb mit gesättigter Verstärkung bestimmt ist.

7. Laserquelle nach einem der vorhergehenden Ansprüche, wobei der Weg des mindestens einen primären Laserimpulses und der sekundären Laserimpulse zwischen der primären Laserquelle und dem Eingang der verstärkenden Einmoden-Lichtleitfaser aus Fasern ist.

8. Laserquelle nach einem der vorhergehenden Ansprüche, wobei die primäre Laserquelle (22) zum Emittieren einer Folge von zeitlich um eine Verzögerung von mindestens 2 $\mu$s getrennten primären Laserimpulsen ausgelegt ist.

9. Laserquelle nach einem der vorhergehenden Ansprüche, wobei das/die Interferometer (24, 44, 54, 64, 74, 76) mindestens ein Interferometer vom Mach-Zehnder-Typ umfasst/-en, wobei die Verzögerungsleitung durch einen Arm des Interferometers gebildet wird.

10. Laser-induziertes Plasmaspektroskopie-Analysesystem (LIBS), das Folgendes umfasst:

    - eine Laserquelle (80) zum Emittieren einer Gruppe von Impulsen nach einem der vorhergehenden Ansprüche,
    - einen Kollektor (84) zum Sammeln eines Strahls, der aus der Interaktion zwischen einem zu analysierenden Objekt (83) und der von der Laserquelle emittierten Gruppe von Impulsen resultiert; und
    - ein Spektrometer (85), das das Erhalten, auf der Basis der Spektralanalyse des gesammelten Strahls, des LIBS-Spektrums des zu analysierenden Objekts ermöglicht.

**11.** Verfahren zum Erzeugen einer Gruppe von Impulsen, das die folgenden Schritte umfasst:

- einen ersten Schritt des Emittierens mindestens eines primären Laserimpulses,
- einen zweiten Schritt des Erzeugens, auf der Basis des primären Impulses, einer Vielzahl von sekundären Laserimpulsen (1, 2, 11, 12, 13, 14), die zeitlich um eine Verzögerung zwischen 50 ps und 10 ns getrennt sind, mittels eines oder mehrerer Interferometer (24, 44, 54, 64, 74, 76),
- einen dritten Schritt des Injizierens der sekundären Laserimpulse in eine verstärkende Einmoden-Lichtleitfaser (262), um eine Gruppe von räumlich überlagerten Impulsen (3, 4, 15, 16, 17, 18) zu bilden, **dadurch gekennzeichnet, dass**:
- der zweite Erzeugungsschritt ferner einen Schritt der spektralen und/oder zeitlichen Formung von mindestens einem der sekundären Laserpulse umfasst.

**12.** Verfahren zum Erzeugen einer Gruppe von Impulsen nach Anspruch 11, das ferner die folgenden Schritte beinhaltet:

- zeitliches Strecken des primären Laserpulses, so dass der primäre Laserimpuls auf eine Pulsdauer von mehr als 50 ps gestreckt wird, und
- zeitliches Komprimieren der Impulse der räumlich überlagerten Impulsgruppe, so dass die Impulse der räumlich überlagerten Impulsgruppe eine Impulsdauer von weniger als 500 fs haben.

**13.** Verfahren zum Erzeugen einer Gruppe von Impulsen nach einem der Ansprüche 11 bis 12, das ferner eine Sättigung der Verstärkung der verstärkenden Einmoden-Lichtleitfaser umfasst.

**14.** Verfahren zum Erzeugen einer Gruppe von Impulsen nach einem der Ansprüche 11 bis 13, das ferner eine Einstellung der Verzögerung zwischen den sekundären Laserimpulsen umfasst.

**Claims**

**1.** Laser source for transmitting a group of pulses comprising:

- a primary laser source (22) which is suitable for the transmission of at least one primary laser pulse,
- one or more interferometers (24, 44, 54, 64, 74, 76) which are suitable for the formation, from the primary laser pulse, of a plurality of secondary laser pulses (1, 2, 11, 12, 13, 14), each interferometer comprising at least one delay line which enables two secondary laser pulses to be separated temporally by a delay ($\Delta t$, $\Delta t'$) between 50 ps and 10 ns,
- a single-mode amplifying optical fibre (262) which is intended to receive the plurality of secondary laser pulses in order to form at the output a group of pulses (3, 4, 15, 16, 17, 18) which are superimposed spatially, **characterised in that**:
- the interferometer(s) comprise(s) spectral and/or temporal shaping means for at least one of the secondary laser pulses.

**2.** Laser source according to the preceding claim, wherein at least one of the interferometers comprises means for controlling the relative optical power of the secondary laser pulses.

**3.** Laser source according to any one of the preceding claims, further comprising:

- a stretcher (32) which is arranged upstream of the single-mode amplifying optical fibre so that the primary laser pulse is stretched to a pulse duration greater than 50 ps, and
- a compressor (36) downstream of the single-mode amplifying optical fibre in order to temporally compress the pulses of the group of pulses so that the pulses of the group of pulses have a pulse duration less than 500 fs.

**4.** Laser source according to any one of the preceding claims, further comprising:
at least one optical pre-amplifier arranged upstream of the amplifying optical fibre.

**5.** Laser source according to any one of the preceding claims, comprising:
a laser diode (266) for optically pumping the single-mode amplifying optical fibre (262).

**6.** Laser source according to any one of the preceding claims, wherein the single-mode amplifying optical fibre is intended to function in gain saturation mode.

7. Laser source according to any one of the preceding claims, wherein the path of the at least one primary laser pulse and the secondary laser pulses between the primary laser source and the input of the single-mode amplifying optical fibre is fibre-based.

8. Laser source according to any one of the preceding claims, wherein the primary laser source (22) is suitable for transmitting a sequence of primary laser pulses which are separated temporally by a delay of at least 2 $\mu$s.

9. Laser source according to any one of the preceding claims, wherein the interferometer(s) (24, 44, 54, 64, 74, 76) comprise(s) at least one interferometer of the Mach-Zehnder type, the delay line being formed by an arm of the interferometer.

10. System for laser induced breakdown spectroscopy (LIBS) comprising:

   - a laser source (80) for transmitting a group of pulses according to any one of the preceding claims,
   - a collector (84) for collecting a beam resulting from the interaction between an object (83) to be analysed and the group of pulses transmitted by the laser source; and
   - a spectrometer (85) which, based on the spectral analysis of the beam collected, enables the LIBS spectrum of the object to be analysed to be obtained.

11. Method for generating a group of pulses comprising the following steps:

   - a first step of transmitting at least one primary laser pulse,
   - a second step of generating from the primary pulse a plurality of secondary laser pulses (1, 2, 11, 12, 13, 14) which are temporally separated by a delay between 50 ps and 10 ns, using one or more interferometers (24, 44, 54, 64, 74, 76),
   - a third step of injecting the secondary laser pulses into a single-mode amplifying optical fibre (262) in order to form a group of pulses (3, 4, 15, 16, 17, 18) which are superimposed spatially, **characterised in that**:
   - the second generation step further comprises a step of spectral and/or temporal shaping of at least one of the secondary laser pulses.

12. Method for generating a group of pulses according to claim 11, further comprising the following steps:

   - temporal stretching of the primary laser pulse so that the primary laser pulse is stretched to a pulse duration greater than 50 ps, and
   - temporal compression of the pulses of the group of spatially superimposed pulses so that the pulses of the group of spatially superimposed pulses have a pulse duration less than 500 fs.

13. Method for generating a group of pulses according to any one of claims 11 to 12, further comprising a gain saturation of the single-mode amplifying optical fibre.

14. Method for generating a group of pulses according to any one of claims 11 to 13, further comprising an adjustment of the delay between the secondary laser pulses.

ART ANTERIEUR FIG.1

FIG.2

EP 3 590 159 B1

FIG.3

EP 3 590 159 B1

FIG.4

FIG.5

FIG.6

FIG.7

FIG.8

FIG.9A

FIG.9B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2009080467 A1, STARODOUMOV

**Littérature non-brevet citée dans la description**

- **LABUTIN et al.** Femtosecond laser-induced breakdown spectroscopy. *Journal of Analytical Atomic Spectrometry,* 2016, vol. 31, 90-118
- **SCAFFIDI et al.** Observations in collinear femtosecond-nanosecond dual pulse laser-induced breakdown spectroscopy. *Applied Spectroscopy,* 2006, vol. 60, 65
- **KIENEL.** Multidimensional coherent pulse addition of ultrashort laser puises. *Optics Letters,* 15 Février 2015, vol. 40 (4), 522-525
- **MILDNER.** Emission signal enhancement of laser ablation of metals (aluminum and titanium) by time delayed femtosecond double pulses from femtoseconds to nanoseconds. *Applied Surface Science,* vol. 302, 291-298